(19)

Europäisches Patentamt

European Patent Office

Office européen des brevets

(11)  EP 2 753 910 B1

(12)  **EUROPEAN PATENT SPECIFICATION**

(45) Date of publication and mention
of the grant of the patent:
**05.10.2016  Bulletin 2016/40**

(21) Application number: **12772358.3**

(22) Date of filing: **24.08.2012**

(51) Int Cl.:
*G01N 3/30* (2006.01)          *G01N 3/52* (2006.01)

(86) International application number:
**PCT/GB2012/052081**

(87) International publication number:
**WO 2013/034887 (14.03.2013 Gazette 2013/11)**

(54) **METHOD&APPARATUS FOR MEASURING WORK INDEX**

VERFAHREN UND VORRICHTUNG ZUR ARBEITSINDEXMESSUNG

PROCÉDÉ ET APPAREIL POUR MESURER UN INDICE DE TRAVAIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **07.09.2011  GB 201115429
14.03.2012  GB 201204505**

(43) Date of publication of application:
**16.07.2014  Bulletin 2014/29**

(73) Proprietor: **Natural Environment Research
Council
Swindon
Wiltshire SN2 1EU (GB)**

(72) Inventors:
• **WALLIS, Humphrey Craven
Sneinton
Nottingham NG2 4NB (GB)**
• **HOLYOAKE, Simon James
Loughborough
Leicestershire
LE12 6US (GB)**

(74) Representative: **Braddon, Nicholas
Barker Brettell LLP
100 Hagley Road
Edgbaston
Birmingham B16 8QQ (GB)**

(56) References cited:
EP-A2- 0 145 241          WO-A1-2007/134367
DE-A1- 2 835 201          JP-A- 2000 162 106
JP-A- 2001 059 804

• L.M TAVARES ET AL: "Modeling of particle
fracture by repeated impacts using continuum
damage mechanics", POWDER TECHNOLOGY,
vol. 123, no. 2-3, 1 March 2002 (2002-03-01), pages
138-146, XP055048238, ISSN: 0032-5910, DOI:
10.1016/S0032-5910(01)00438-7
• MORRISON ET AL: "Modelling of incremental
rock breakage by impact - For use in DEM
models", MINERALS ENGINEERING,
PERGAMON PRESS , OXFORD, GB, vol. 20, no.
3, 9 February 2007 (2007-02-09), pages 303-309,
XP005880793, ISSN: 0892-6875, DOI:
10.1016/J.MINENG.2006.10.015
• TAVARES ET AL: "Impact work index prediction
from continuum damage model of particle
fracture", MINERALS ENGINEERING,
PERGAMON PRESS , OXFORD, GB, vol. 20, no.
15, 18 October 2007 (2007-10-18), pages
1368-1375, XP022321673, ISSN: 0892-6875

EP 2 753 910 B1

**Description**

The invention relates to methods and apparatus for measuring work index.

The energy required per unit mass to break rock of a given type, also known as the crushability index or work index of the rock, is a useful indicator of the energy needed to produce aggregate from such rock, and is an increasingly important factor in construction projects. An aggregates levy, and targets to increase the use of recycled aggregates, have increased the pressure on the minerals industry to reduce the environmental impact of producing aggregates. Measurement of the work index of a given type of rock assists in assessing the carbon footprint and climate change impact involved in producing aggregate from that rock.

In a known method for measuring work index of a given type of rock, a rock sample is simultaneously subjected to impacts from opposite directions delivered by two hammers mounted at the ends of respective rigid pendulums hinged from respective points above the rock sample (i.e. those points are higher than the rock sample). The pendulums are raised and then released, the energy absorbed by the rock sample being taken as the potential energy of the hammers prior to release and subsequent impact with the rock sample. A series of trials is generally made, with the hammers being raised higher at each trial until the rock sample is broken. The potential energy of the hammers for the final trial (which achieves breaking of the rock sample) is taken as a measure of the work index of the rock. This method is known as a Bond impact test, after F.C. Bond who devised it in 1946.

"Impact work index prediction from continuum damage model of particle fracture" by L.M. Tavares and R.M. Carvalho, Minerals Engineering 20 (2007) 1368-1375 discloses the application of a model that combines measurements of particle fracture energies and a parameter that characterizes material amenability to breakage by repeated impacts in the prediction of the Bond crushability index. An impact pendulum that follows strictly Bond's standard for crushability measurement was used.

The present invention provides a method of determining a more accurate value of the work index of a rock sample, by measuring the energy required to break the sample into two or more pieces, the method comprising the steps of: subjecting the sample to one or more impacts until the sample breaks, wherein the step of subjecting the rock sample to an impact comprises mounting the rock sample on a support a distance h vertically below two pivot points from which two rigid pendulums are respectively pivoted, the rigid pendulums being mounted by respective ends thereof for rotation about respective pivot points in a common plane and each rigid pendulum carrying a respective hammer or mass at an end thereof remote from a pivot point, the distance from a pivot point to the midpoint of a corresponding hammer or mass being substantially h, the method further comprising raising each hammer or mass to substantially the same vertical height above the rock sample and releasing the masses; and measuring the energy absorbed by the sample at each impact, wherein the step of measuring the energy absorbed by the rock sample for a first impact comprises measuring the respective inclinations of the pendulums prior to release of the masses and wherein the step of measuring the energy absorbed by the rock sample for each subsequent impact comprises measuring the respective maximum inclinations of the pendulums subsequent to the previous impact of the masses with the rock sample, wherein the pendulums are momentarily at rest before swinging back down towards the sample, and the step of measuring the energy absorbed by the rock sample for a given impact comprises measuring the respective maximum inclinations of the pendulums subsequent to impact of the masses with the rock sample; characterized in that the method further comprises the step of summing said measurements of energy to obtain a measurement of the total energy absorbed by the sample and using the measured value of the total energy absorbed to calculate the work index of the sample.

In the (known) Bond impact test, only the estimated energy absorbed by a rock sample during the impact which finally causes it to break is taken as a measure of the energy needed to break the rock. In other words the energy absorbed during all previous impacts is ignored. By calculating the cumulative energy absorbed by all impacts, up to and including the impact which causes the sample to finally break, a much more accurate value of work index is obtained.

The step of measuring the energy absorbed by the rock sample for a given impact comprises the step of measuring the respective inclinations of the pendulums prior to release of the masses. This allows the initial potential energy of the masses to be ascertained. The step of measuring the energy absorbed by the rock sample for a given impact comprises measuring the respective maximum inclinations of the pendulums subsequent to impact of the masses with the rock sample - this allows the potential energy of the masses to be calculated after rebounding following impact with the rock sample.

Preferably, the step of measuring the energy absorbed by the rock sample for a given impact comprises measuring the angular velocity of both pendulums on impact with the rock sample, as this may be used to calculate the kinetic energy of the masses immediately before impact with the rock sample.

The energy absorbed by the rock sample in a particular impact can be calculated by taking the difference in the potential energy of the masses at rest before the impact (for a first impact this would be the potential energy of the masses at rest before release) and at the time that they next come to rest following impact with the rock sample, i.e. at the maximum height the pendulum reaches when rebounding from the sample after impact, where the pendulum momentarily is at rest (has zero velocity) before swinging back down towards the sample. However, more preferably the angular velocity of the pendulums immediately prior to impact may be used to calculate the kinetic energy of the masses, and the potential energy of the masses after they come to rest after impact is subtracted to find the energy absorbed by the rock sample.

In order to allow the force exerted on the rock sample to be established, preferably the angular acceleration of the rigid pendulums is measured after the masses have been released.

Preferably, the method may further comprise measuring the mass of the rock sample. The mass of the rock sample may be measured continuously or periodically while carrying out the method.

Preferably, the end point of the method, i.e. when the rock sample breaks, may be determined by reference to a predetermined parameter or definition, e.g. the rock sample being broken to a pre-determined degree. For example, in order to arrive at a consistent value of work index for a given type of rock, preferably the rock sample may be subjected to one or more impacts until the rock sample breaks such that the mass of fragments removed therefrom equals or exceeds a given proportion of the mass of the unbroken rock sample, the energy absorbed by the rock sample being measured at each impact, and the measurements of energy summed to obtain a measurement of the total energy absorbed by the rock sample. For example, the rock sample may be subjected to one or more impacts until the rock sample breaks such that the mass of fragments removed therefrom equals or exceeds 10%, 25% or half the mass of the unbroken rock sample.

Preferably each rock sample is machined to an accurate cube having a side of predetermined length prior to mounting on the support so that sample shape is consistent for all samples. Typically, the predetermined length may be from 3 mm to 50 mm, e.g. from 20 mm to 50 mm. The deformation of a rock sample may be measured during an impact.

The deformation and the distance through which the hammers decelerate from impact velocity to zero velocity may provide an accurate measure of the force exerted by the hammers on the sample. Imaging means may be used to observe and preferably measure deformation of a rock sample during an impact.

Another aspect of the invention provides apparatus for determining a more accurate value of the work index of a rock sample by measuring the energy required to break the sample into two or more pieces, the apparatus comprising: means for subjecting the sample to one or more impacts until the sample breaks, wherein the means for subjecting the rock sample to one or more impacts comprises a mount for supporting the rock sample, and first and second rigid pendulums of length h having respective first ends mounted for rotation of the rigid pendulums in a common plane at a distance h above the mount when the apparatus is in its normal operating orientation, the rigid pendulums carrying respective masses or hammers at the respective second ends thereof; and means for measuring the energy absorbed by the sample at each impact, the means for measuring the energy absorbed by the rock sample at each impact comprising a respective shaft encoder mounted on the rigid pendulums and reading means for reading the shaft encoders to establish the inclinations of the rigid pendulums; characterized in that the apparatus further comprises means for summing said measurements of energy to obtain a measurement of the total energy absorbed by the sample and means for calculating the work index of the rock sample by using the measured value of the total energy absorbed to calculate the work index of the sample.

Preferably, the masses or hammers may weigh at least 5 kg and/or no more than 30 kg. For instance, the masses or hammers may weigh 5 kg, 10 kg, 15 kg or 20 kg.

Preferably, the length h may be at least 0.1 m and/or no more than 1 m, preferably at least 0.2 m and/or no more than 0.8 m. For instance, the length h may be 0.3 m, 0.4 m, 0.5 m, 0.6 m or 0.7 m.

Preferably, said reading means may be arranged to cooperate with the shaft encoders to determine the angular velocity and/or angular acceleration of the pendulums.

In order to allow the pendulum arms to be raised prior to subsequent release and impact with a rock sample, the apparatus preferably comprises first and second electromagnetic latches for engaging and releasing the masses, and first and second winch-and-wire mechanisms for raising the electromagnetic latches (with the masses attached) to a desired vertical height above the sample.

Preferably, the apparatus may comprise means for measuring the mass of a rock sample on the mount. For instance, the mount may comprise a mass balance. Imaging means may be provided for observing and preferably measuring the deformation of a rock sample during an impact with the two masses.

Embodiments of the invention are described below with reference to the accompanying drawings in which:

Figure 1     shows a side view of an apparatus of the invention;
Figure 2     shows a perspective view of the Figure 1 apparatus; and
Figure 3     shows a portion of the Figure 1 apparatus comprising a processing unit for calculating work index and/or the energy absorbed by rock sample resulting in breaking of the rock sample.

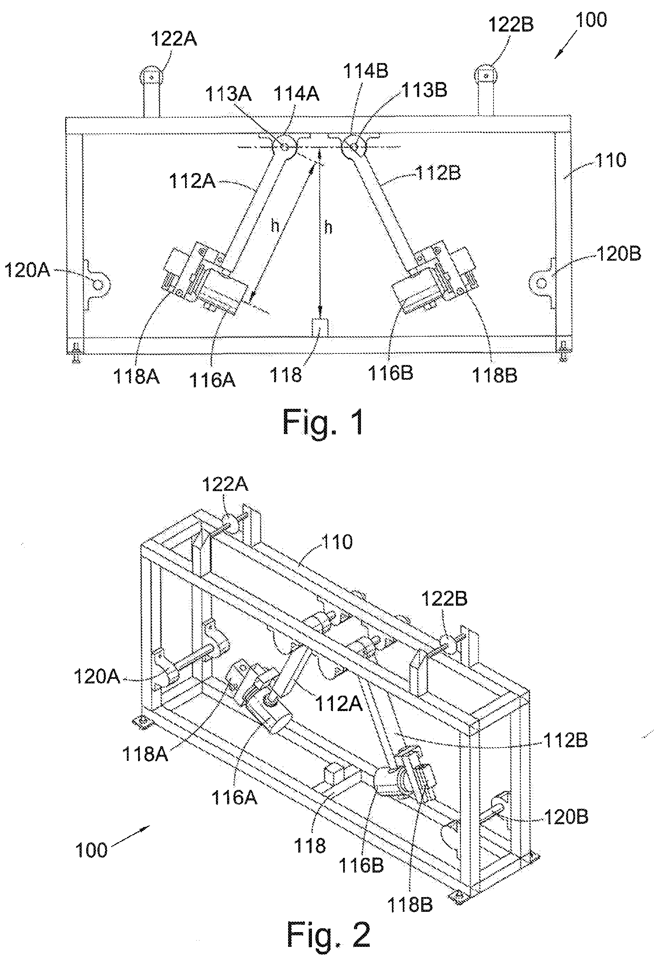

Referring to Figures 1 and 2, an apparatus of the invention is indicated generally by 100. The apparatus 100 comprises a rigid frame 110 and two rigid pendulum arms 112A, 112B each of which is mounted for rotation about one end, and which carries a 10 kg mass, or hammer, 116A, 116B at the other end. Each arm 112A, 112B has a length of 0.5 m. Arms 112A, 112B are mounted at pivot points 113A and 113B respectively. The distance h from the pivot points 113A, 113B to the mid-point of respective masses 116A, 116B is substantially the same as the vertical distance below the pivot points 113A, 113B of a support or plinth 118 which supports a rock sample in use of the apparatus. Each mass 116A, 116B has an associated electromagnetic latch 118A, 118B which can hold or release the associated mass or hammer 116A, 116B. Each electromagnetic latch 118A, 118B may be raised by means of a winch-and-wire mechanism comprising windlasses 120A, 120B and pulleys 122A, 122B. The ends of the pendulum arms mounted at pivot points 113A, 113B each carry a respective shaft encoder 114A, 114B which allow the inclinations of the arms 112A, 112B to be measured during use of the apparatus 100, and also tracked over time to determine their angular velocities and angular accelerations.

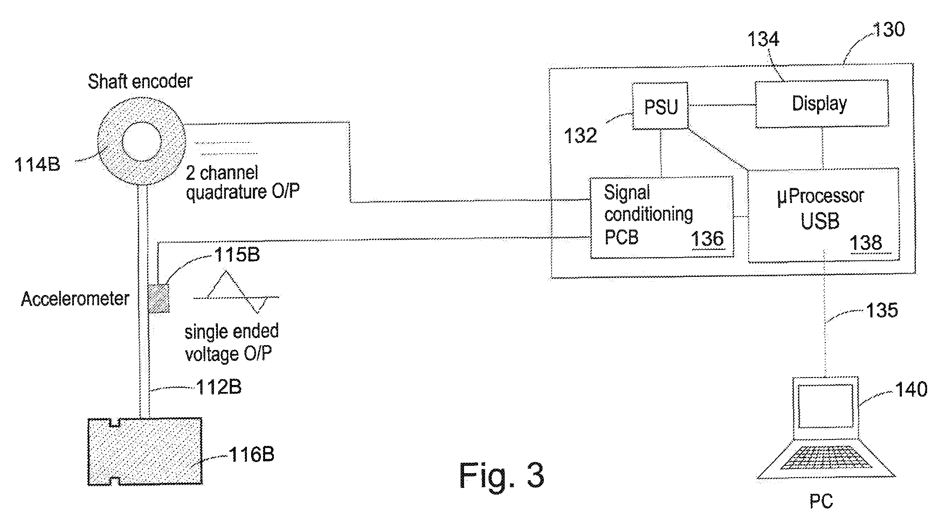

Figure 3 shows pendulum arm 112B in relation to a processing/display unit 130 and a PC 140. Rigid pendulum arm 112B may optionally carry an accelerometer 115B. Output signals from the shaft encoder 114B, and from the accelerometer 112B (if provided) are input to a signal conditioning unit 136 of a processing/display unit 130 which provides a rugged housing and which further comprises a power supply unit 132, display 134 and microprocessor 138. Output from the microprocessor 138 may be input to a PC 140. Rigid pendulum arm 112A has the structure and relation to the processing/display unit 130 shown in Figure 3 in relation to pendulum arm 112B. The signal conditioning unit 136 comprises input filters to de-couple RF noise and signal clamping electronics to prevent incoming signals going above the input threshold of the microprocessor 138.

In use of the apparatus, a rock sample is placed on the plinth or support 118 and the hammers/masses 116A, 116B are raised to a particular height above the plinth 118 by means of the electromagnetic latches 118A, 118B and the winch-and-wire mechanism. The inclination of the rigid pendulum arms to the vertical, and the rate of change of the inclination, is measured and recorded by the processing/display unit and used to evaluate the potential energy of the hammers 116A, 116B when raised. The electromagnetic latches 118A, 118B are then energised so that the pendulum arms 112A, 112B are released. The pendulum arms 112A, 112B then swing downwards to impact the rock sample substantially simultaneously and from opposite sides thereof. The maximum angular velocity of the pendulums 112A, 112B is measured by the processing/display unit 130 and used to obtain the maximum kinetic energy of the hammers 116A, 116B prior to impact with the rock sample. The rigid pendulums 112A, 112B and hammers 116A, 116B re-bound after impact with the rock sample to a particular height; the inclination of the pendulum arms 112A, 112B is also measured and recorded to find the maximum potential energy of the hammers 116A, 116B after impact with the rock sample.

The processing/display unit 130 is arranged to subtract the maximum potential energy of the hammers 116A, 116B upon re-bounding from the rock sample after impact from the maximum kinetic energy of the hammers 116A, 116B immediately prior to impact to arrive at the energy absorbed by the rock sample. The processing/display unit 130 may also evaluate the deceleration of the hammers 116A, 116B during impact by means of accelerometers, such as 115B, in order to determine the force exerted on the sample during impact. Signals from the shaft encoders 114A, 114B are passed to a logic circuit (not shown) within the processor/display unit 130, the logic circuit deriving a single combined pulse count to double the resolution of the shaft encoders and to find the direction of travel of the hammers 116A, 116B (i.e. whether the hammers are descending or rebounding).

After reaching their maximum height on re-bounding from the first impact with the rock sample, the hammers 116A, 116B descend again to impact the rock sample for a second time. After re-bounding from the rock sample a second time, the hammers 116A, 116B will impact and re-bound from the rock sample several more times before finally coming to rest. For each impact, the processing/display unit 130 measures the maximum kinetic energy of the hammers 116A, 116B prior to impact and subtracts their initial potential energy to arrive at a measure of absorbed energy for that impact. Unit 130 sums the values of absorbed energy for each impact to provide the cumulative total energy absorbed by the rock sample.

If the rock sample remains unbroken after a first series of impacts, the hammers 116A, 116B may be raised again by means of the electromagnetic latches 118A, 118B and the winch-and-wire system incorporating windlasses 120A, 120B and winches 122A, 122B. When the electromagnetic latches 118A, 118B are energised, the rock sample mounted on plinth 118 is subject to a second series of impacts, and the cumulative energy absorbed by the rock sample over both series of impacts from hammers 116A, 116B is further evaluated by the microprocessor 138.

Once the rock sample has been broken such that the mass of the remaining sample is, for example, 50% of the initial mass of the original rock sample, the processing/display unit 130 ceases to continue to calculate the cumulative energy absorbed by the rock sample, and a final value for the total absorbed energy is displayed and/or passed to the PC 140. The plinth 118 may include a balance or other weighing means arrange to output a signal to the processing/display unit 118 when the mass of the rock sample has reaches an appropriate percentage of its original mass.

Data relating to the angular positions and angular velocities of the pendulum arms, accelerometer output data (where provided) and so on is time-stamped and stored in unit 130. Subsequently, this data may be passed to PC 140 via USB connection 135 as a .txt file for plotting using a spreadsheet program. The data may additionally be displayed by the display 134 of the unit 130 during acquisition, thus allowing a user of the apparatus 100 to monitor the results of impacts in real time. For instance, the user may be able to assess the deformation and/or breakage of the sample in real time.

The work index WI of a rock sample may be represented by

$$WI = c\frac{IS}{SD}$$ Equation 1

where c is a constant, IS (in units $Nm^{-2}$) is the impact strength required to break the rock sample and SD is the density of the rock (units $kgm^{-3}$). Equation 1 is dimensionally consistent. Both sides of Equation1 have dimensions $L^2T^{-2}$, which are the dimensions of energy per unit mass. The processing unit 130 may if required be arranged to obtain the work index for a rock sample on the basis of equation 1 when the rock sample is broken to a pre-determined degree by the apparatus of Figure 1.

The apparatus 100 may further comprise imaging means (not shown) for observing and preferably measuring the deformation of a rock sample during at least one impact.

Advantageously, measuring deformation of the rock sample may add value to the overall output of the test, because, for example, it may allow for the measurement and calculation of average force during impact (whether or not the sample fractures). This value, when expressed as a pressure (force/area) may be useful in deriving a dimensionally meaningful equation.

Advantageously, the invention allows a user to capture every moment of the trajectory of the means for subjecting the rock sample to one or more impacts. Thus, for example, a complete history of the motion of the masses or hammers during the test may be obtained. As a result, a more accurate and reliable value of work index may be obtained. Advantageously, the results may be more repeatable. Accordingly, it may not be necessary to carry out as many tests in order to determine the work index of a given material, e.g. rock.

Additionally or alternatively, other potentially useful information about the sample may be gathered.

While the invention has been described principally in relation to testing rock and may have particular utility in the aggregate industry, it is envisaged that other materials may be tested in accordance with the invention.

**Claims**

1. A method of determining a more accurate value of the work index of a rock sample by measuring the energy required to break the rock sample into two or more pieces, the method comprising the steps of:

subjecting the rock sample to one or more impacts until the rock sample breaks, wherein the step of subjecting the rock sample to an impact comprises mounting the rock sample on a support (118) a distance h vertically below two pivot points (113A, 113B) from which two rigid pendulums (112A, 112B) are respectively pivoted, the rigid pendulums (112A, 112B) being mounted by respective ends thereof for rotation about respective pivot points (113A, 113B) in a common plane and each rigid pendulum (112A, 112B) carrying a respective mass (116A, 116B) at an end thereof remote from a pivot point (113A, 113B), the distance from a pivot point (113A, 113B) to the midpoint of a corresponding mass (116A, 116B) being substantially h, the method further comprising raising each mass (116A, 116B) to substantially the same vertical height above the rock sample and releasing the masses (116A, 116B); and
measuring the energy absorbed by the rock sample at each impact, wherein the step of measuring the energy absorbed by the rock sample for a first impact comprises measuring the respective inclinations of the pendulums (112A, 112B) prior to release of the masses and wherein the step of measuring the energy absorbed by the rock sample for each subsequent impact comprises measuring the respective maximum inclinations of the pendulums (112A, 112B) subsequent to the previous impact of the masses (116A, 116B) with the rock sample, wherein the pendulums (112A, 112B) are momentarily at rest before swinging back down towards the sample, and the step of measuring the energy absorbed by the rock sample for a given impact comprises measuring the respective maximum inclinations of the pendulums (112A, 112B) subsequent to impact of the masses (116A, 116B) with the rock sample;

**characterized in that** the method further comprises the step of summing said measurements of energy to obtain a measurement of the total energy absorbed by the rock sample and using the measured value of the total energy absorbed to calculate the work index of the rock sample.

2. A method according to claim 1 wherein the step of measuring the energy absorbed by the rock sample for a given impact comprises measuring the angular velocity of both pendulums (112A, 112B) on impact with the rock sample.

3. A method according to claim 1 or claim 2 further comprising measuring the angular acceleration of at least one of the rigid pendulums (112A, 112B) after release of the masses.

4. A method according to claim 1, claim 2 or claim 3 further comprising measuring the mass of the rock sample.

5. A method according to claim 4, wherein the mass of the rock sample is measured continuously or periodically while carrying out the method.

6. A method according to any preceding claim comprising subjecting the rock sample to one or more impacts until the rock sample breaks such that the mass of fragments removed therefrom equals or exceeds a predetermined proportion of, e.g. 10%, 25% or half the mass of, the unbroken rock sample, and measuring the energy absorbed by the rock sample at each impact.

7. A method according to any preceding claim, wherein the rock sample is machined to a cube having a side of predetermined length prior to mounting the rock sample on the support.

8. A method according to any preceding claim further comprising the step of measuring the deformation of the rock sample during at least one impact.

9. Apparatus (100) for determining a more accurate value of the work index of a rock sample by measuring the energy required to break the rock sample into two or more pieces, the apparatus (100) comprising: means for subjecting the rock sample to one or more impacts until the rock sample breaks, wherein the means for subjecting the rock sample to one or more impacts comprises a mount (118) for supporting the rock sample, and first and second rigid pendulums (112A, 112B) of length h having respective first ends mounted for rotation of the rigid pendulums (112A, 112B) in a common plane at a distance h above the mount (118) when the apparatus (100) is in its normal operating orientation, the rigid pendulums (112A, 112B) carrying respective masses (116A, 116B) at the respective second ends thereof; and means for measuring the energy absorbed by the rock sample at each impact, the means for measuring the energy absorbed by the rock sample at each impact comprising a respective shaft encoder (114A, 114B) mounted on the rigid pendulums (112A, 112B) and reading means for reading the shaft encoders (114A, 114B) to establish the inclinations of the rigid pendulums (112A, 112B); **characterized in that** the apparatus (100) further comprises means for summing said measurements of energy to obtain a measurement of the total energy absorbed by the rock sample and means for calculating the work index of the rock sample by using the measured value of the total energy absorbed to calculate the work index of the rock sample.

10. Apparatus (100) according to claim 9, wherein the reading means is arranged to cooperate with the shaft encoders (114A, 114B) to determine the angular velocity of the pendulums (112A, 112B).

11. Apparatus (100) according to claim 9 or claim 10, wherein the reading means is arranged to cooperate with the shaft encoders (114A, 114B) to determine the angular acceleration of the rigid pendulums (112A, 112B).

12. Apparatus (100) according to any of claims 9 to 11 further comprising first and second electromagnetic latches (118A, 118B) for holding and releasing the mass (116A, 116B), and first and second winch and wire mechanisms for raising the latches (118A, 118B) vertically above the rock sample when mounted on the mount (118).

13. Apparatus (100) according to any of claims 9 to 12 further comprising means for measuring the mass of a rock sample on the mount (118).

14. Apparatus (100) according to any of claims 9 to 13 further comprising imaging means for observing and preferably measuring the deformation of a rock sample mounted in the apparatus (100) during at least one impact.

**Patentansprüche**

1. Ein Verfahren für die Bestimmung eines korrekteren Werts für den Arbeitsindex einer Gesteinsprobe durch Messung der Energie, die für das Aufbrechen der Gesteinsprobe in zwei oder mehr Teile erforderlich ist, das Verfahren weist dabei die folgenden Schritte auf:

die Ausführung an einer Gesteinsprobe von einem oder mehreren Stößen bis die Gesteinsprobe zerbricht, wobei der Schritt der Ausführung eines Stoßes an der Gesteinsprobe die Befestigung der Gesteinsprobe auf einer Auflage (118) in einem Abstand h vertikal unter zwei Drehpunkten (113A, 113B) aufweist, an denen zwei starre Pendel (112A, 112B) drehbar gelagert sind, das starre Pendel (112A, 112B) ist dabei an entsprechenden Enden für die Drehung um entsprechende Drehpunkte (113A, 113B) in einer gemeinsamen Ebene montiert und jedes der starren Pendel (112A, 112B) hat eine bestimmte Masse (116A, 116B) an einem Ende entfernt von einem Drehpunkt (113A, 113B), der Abstand von einem Drehpunkt (113A, 113B) zu einem Mittelpunkt einer entsprechenden Masse (116A, 116B) ist dabei im Wesentlichen h, das Verfahren weist darüberhinaus die Anhebung der jeweiligen Masse (116A, 116B) in die im Wesentlichen gleiche vertikale Höhe über der Gesteinsprobe auf und die Freigabe dieser Massen (116A, 116B); und

die Messung der Energie, die von der Gesteinsprobe bei jedem Stoß absorbiert wird, wobei der Schritt der Messung der von der Gesteinsprobe beim ersten Stoß absorbierten Energie die Messung der entsprechenden Neigung der Pendel (112A, 112B) vor der Freigabe der Massen aufweist und wobei der Schritt der Messung der von der Gesteinsprobe für jeden nachfolgenden Stoß absorbierten Energie die Messung der jeweiligen Neigungen der Pendel (112A, 112B) nach dem vorhergehenden Stoß der Massen (116A, 116B) gegen die Gesteinsprobe aufweist, wobei die Pendel (112A, 112B) eine kurze Zeit stillstehen bevor sie wieder zurück in Richtung der Gesteinsprobe schwingen, und der Schritt der Messung der von der Gesteinsprobe für einen gegebenen Stoß absorbierten Energie weist die Messung der jeweiligen Höchstneigungen der Pendel (112A, 112B) nach dem Stoß der Massen (116A, 116B) gegen die Gesteinsprobe auf;

**gekennzeichnet dadurch, dass** das Verfahren darüberhinaus den Schritt der Summierung der Energiemessungen aufweist, um eine Messung der von der Gesteinsprobe absorbierten Gesamtenergie zu erhalten und den Messwert der absorbierten Gesamtenergie für die Berechnung des Arbeitsindexes der Gesteinsprobe zu verwenden.

2. Ein Verfahren gemäß Anspruch 1, wobei der Schritt der Messung der von der Gesteinsprobe bei einem gegebenen Stoß absorbierten Energie die Messung der Winkelfrequenz beider Pendel (112A, 112B) beim Stoß gegen die Gesteinsprobe aufweist.

3. Ein Verfahren gemäß Anspruch 1 oder Anspruch 2, das darüberhinaus die Messung der Winkelgeschwindigkeit mindestens eines der starren Pendel (112A, 112B) nach der Freigabe der Massen aufweist.

4. Ein Verfahren gemäß Anspruch 1, Anspruch 2 oder Anspruch 3, das darüberhinaus die Messung der Masse der Gesteinsprobe aufweist.

5. Ein Verfahren gemäß Anspruch 4, wobei die Masse der Gesteinsprobe während der Durchführung des Verfahrens kontinuierlich oder periodisch gemessen wird.

6. Ein Verfahren gemäß eines der vorhergehenden Ansprüche, das die Ausführung an der Gesteinsprobe eines oder mehrerer Stöße aufweist, bis die Gesteinsprobe zerbricht, so dass die Masse der Einzelteile, die sich davon gelöst hat, ein vorbestimmtes Verhältnis, z.B. 10%, 25% oder die Hälfte der Masse im Vergleich zur unzerbrochenen Gesteinsprobe erreicht oder überschreitet, und die Messung der von der Gesteinsprobe bei jedem Stoß absorbierten Energie.

7. Ein Verfahren gemäß eines der vorhergehenden Ansprüche, wobei die Gesteinsprobe zu einem Würfel mit einer vorbestimmten Seitenlänge verarbeitet wird, bevor die Gesteinsprobe auf der Auflage montiert wird.

8. Ein Verfahren gemäß eines der vorhergehenden Ansprüche, das darüberhinaus den Schritt der Messung der Deformation der Gesteinsprobe während mindestens eines Stoßes aufweist.

9. Ein Apparat (100) für die Bestimmung eines genaueren Werts für den Arbeitsindex einer Gesteinsprobe durch die Messung der Energie, die für das Aufbrechen der Gesteinsprobe in zwei oder mehr Teile erforderlich ist, der Apparat (100) weist dabei Folgendes auf: eine Vorrichtung für die Ausführung an der Gesteinsprobe von einem oder mehreren Stößen bis die Gesteinsprobe bricht, wobei die Vorrichtung für die Ausführung an der Gesteinsprobe von einem oder mehreren Stößen eine Auflage (118) für die Gesteinsprobe aufweist, und ein erstes und zweites starres Pendel (112A, 112B) mit der Länge h und einem entsprechenden ersten Ende, das für die Drehung der starren Pendel (112A, 112B) in einer gemeinsamen Ebene in einem Abstand h über der Auflage (118) montiert ist, wenn sich der Apparat (100) in seiner normalen Betriebsausrichtung befindet, die starren Pendel (112A, 112B) tragen dabei entsprechende Massen (116A, 116B) an den entsprechenden zweiten Enden; und eine Vorrichtung für die Messung der von der Gesteinsprobe bei jedem Stoß absorbierten Energie, die Vorrichtung für die Messung der von der Gesteinsprobe bei jedem Stoß absorbierten Energie weist dabei einen entsprechenden Winkelcodierer (114A, 114B) auf, der an den starren Pendeln (112A, 112B) montiert ist, und eine Ablesevorrichtung für die Ablesung des Winkelcodierers (114A, 114B), um die Neigungen der starren Pendel (112A, 112B) festzulegen; **dadurch gekennzeichnet, dass** der Apparat (100) darüberhinaus eine Vorrichtung für die Summierung der Energiemessungen aufweist, um die Messung der von der Gesteinsprobe absorbierten Gesamtenergie auszuführen und eine Vorrichtung für die Berechnung des Arbeitsindex der Gesteinsprobe unter Verwendung des Messwerts der absorbierten Gesamtenergie, für die Berechnung des Arbeitsindex der Gesteinsprobe.

**10.** Ein Apparat (100) gemäß Anspruch 9, wobei die Ablesevorrichtung so angeordnet ist, dass sie mit den Winkelcodierern (114A, 114B) zusammenwirkt, um die Winkelfrequenz der Pendel (112A, 112B) zu bestimmen.

**11.** Ein Apparat (100) gemäß Anspruch 9 oder Anspruch 10, wobei die Ablesevorrichtung so angeordnet ist, dass sie mit den Winkelcodierern (114A, 114B) zusammenwirkt, um die Winkelgeschwindigkeit der starren Pendel (112A, 112B) zu bestimmen.

**12.** Ein Apparat (100) gemäß eines der Ansprüche 9 bis 11, der darüberhinaus einen ersten und zweiten elektromagnetischen Verschluss (118A, 118B) für das Halten und Lösen der Massen (116A, 116B) aufweist, und einen ersten und zweiten Winden- und Drahtmechanismus für das vertikale Anheben der Verschlüsse (118A, 118B) über die Gesteinsprobe, wenn sie an der Auflage (118) montiert ist.

**13.** Ein Apparat (100) gemäß eines der Ansprüche 9 bis 12, der darüberhinaus eine Vorrichtung für die Messung der Masse einer Gesteinsprobe auf der Auflage (118) aufweist.

**14.** Ein Apparat (100) gemäß eines der Ansprüche 9 bis 13, der darüberhinaus eine Bildgebungsvorrichtung für die Überwachung und vorzugsweise die Messung der Deformation einer Gesteinsprobe aufweist, die auf dem Apparat (100), während mindestens eines Stoßes, montiert ist.

**Revendications**

**1.** Un procédé de détermination d'une valeur plus précise de l'indice de travail d'un échantillon de roche par la mesure de l'énergie nécessaire pour rompre l'échantillon de roche en deux ou plus morceaux, le procédé comprenant les opérations suivantes :

la soumission de l'échantillon de roche à un ou plusieurs impacts jusqu'à ce que l'échantillon de roche se rompe, où l'opération de soumission de l'échantillon de roche à un impact comprend le montage de l'échantillon de roche sur un support (118) à une distance h verticalement sous deux points de pivotement (113A, 113B) à partir desquels deux pendules rigides (112A, 112B) sont respectivement pivotés, les pendules rigides (112A, 112B) étant montés par des extrémités respectives de ceux-ci pour une rotation autour de points de pivotement respectifs (113A, 113B) dans un plan commun et chaque pendule rigide (112A, 112B) portant une masse respective (116A, 116B) à une extrémité de celui-ci à distance d'un point de pivotement (113A, 113B), la distance d'un point de pivotement (113A, 113B) au point médian d'une masse correspondante (116A, 116B) étant sensiblement h, le procédé comprenant en outre le levage de chaque masse (116A, 116B) à sensiblement la même hauteur verticale au-dessus de l'échantillon de roche et la libération des masses (116A, 116B), et

la mesure de l'énergie absorbée par l'échantillon de roche à chaque impact, où l'opération de mesure de l'énergie absorbée par l'échantillon de roche pour un premier impact comprend la mesure des inclinaisons respectives des pendules (112A, 112B) avant la libération des masses et où l'opération de mesure de l'énergie absorbée par l'échantillon de roche pour chaque impact subséquent comprend la mesure des inclinaisons maximales respectives des pendules (112A, 112B) suite à l'impact précédent des masses (116A, 116B) avec l'échantillon de roche, où les pendules (112A, 112B) sont momentanément au repos avant d'osciller en arrière vers le bas vers l'échantillon, et l'opération de mesure de l'énergie absorbée par l'échantillon de roche pour un impact donné comprend la mesure des inclinaisons maximales respectives des pendules (112A, 112B) suite à impact des masses (116A, 116B) avec l'échantillon de roche,

**caractérisé en ce que** le procédé comprend en outre l'opération de totalisation desdites mesures d'énergie de façon à obtenir une mesure de l'énergie totale absorbée par l'échantillon de roche et l'utilisation de la valeur mesurée de l'énergie totale absorbée de façon à calculer l'indice de travail de l'échantillon de roche.

**2.** Un procédé selon la Revendication 1 où l'opération de mesure de l'énergie absorbée par l'échantillon de roche pour un impact donné comprend la mesure de la vitesse angulaire des deux pendules (112A, 112B) à l'impact avec l'échantillon de roche.

**3.** Un procédé selon la Revendication 1 ou 2 comprenant en outre la mesure de l'accélération angulaire d'au moins un des pendules rigides (112A, 112B) après la libération des masses.

**4.** Un procédé selon la Revendication 1, 2 ou 3 comprenant en outre la mesure de la masse de l'échantillon de roche.

**5.** Un procédé selon la Revendication 4, où la masse de l'échantillon de roche est mesurée en continu ou périodiquement pendant l'exécution du procédé.

**6.** Un procédé selon l'une quelconque des Revendications précédentes comprenant la soumission de l'échantillon de roche à un ou plusieurs impacts jusqu'à ce que l'échantillon de roche se rompe de sorte que la masse de fragments retirée de celui-ci soit égale à ou dépasse une proportion prédéterminée, par exemple 10%, 25% ou la moitié de la masse, de l'échantillon de roche non rompu, et la mesure de l'énergie absorbée par l'échantillon de roche à chaque impact.

**7.** Un procédé selon l'une quelconque des Revendications précédentes, où l'échantillon de roche est usiné en un cube possédant un côté d'une longueur prédéterminée avant le montage de l'échantillon de roche sur le support.

**8.** Un procédé selon l'une quelconque des Revendications précédentes comprenant en outre l'opération de mesure de la déformation de l'échantillon de roche au cours d'au moins un impact.

**9.** Un appareil (100) de détermination d'une valeur plus précise de l'indice de travail d'un échantillon de roche par la mesure de l'énergie nécessaire pour rompre l'échantillon de roche en deux ou plus morceaux, l'appareil (100) comprenant : un moyen de soumission de l'échantillon de roche à un ou plusieurs impacts jusqu'à ce que l'échantillon de roche se rompe, où le moyen de soumission de l'échantillon de roche à un ou plusieurs impacts comprend une monture (118) destinée à soutenir l'échantillon de roche, et un premier et un deuxième pendules rigides (112A, 112B) de longueur h possédant des premières extrémités respectives montées pour la rotation des pendules rigides (112A, 112B) dans un plan commun à une distance h au-dessus de la monture (118) lorsque l'appareil (100) est dans son orientation de fonctionnement normale, les pendules rigides (112A, 112B) portant des masses respectives (116A, 116B) au niveau des deuxièmes extrémités respectives de ceux-ci, et un moyen de mesure de l'énergie absorbée par l'échantillon de roche à chaque impact, le moyen de mesure de l'énergie absorbée par l'échantillon de roche à chaque impact comprenant un codeur d'arbre respectif (114A, 114B) monté sur les pendules rigides (112A, 112B) et un moyen de lecture destiné à la lecture des codeurs d'arbre (114A, 114B) de façon à établir les inclinaisons des pendules rigides (112A, 112B), **caractérisé en ce que** l'appareil (100) comprend en outre un moyen de totalisation desdites mesures d'énergie de façon à obtenir une mesure de l'énergie totale absorbée par l'échantillon de roche et un moyen de calcul de l'indice de travail de l'échantillon de roche au moyen de la valeur mesurée de l'énergie totale absorbée de façon à calculer l'indice de travail de l'échantillon de roche.

**10.** L'appareil (100) selon la Revendication 9, où le moyen de lecture est agencé de façon à coopérer avec les codeurs d'arbre (114A, 114B) de façon à déterminer la vitesse angulaire des pendules (112A, 112B).

**11.** L'appareil (100) selon la Revendication 9 ou 10, où le moyen de lecture est agencé de façon à coopérer avec les codeurs d'arbre (114A, 114B) de façon à déterminer l'accélération angulaire des pendules rigides (112A, 112B).

**12.** L'appareil (100) selon l'une quelconque des Revendications 9 à 11 comprenant en outre un premier et un deuxième verrous électromagnétiques (118A, 118B) destinés au maintien et à la libération de la masse (116A, 116B) et un premier et un deuxième mécanismes de poulie et de câble destinés au levage des verrous (118A, 118B) verticalement au-dessus de l'échantillon de roche lorsqu'ils sont montés sur la monture (118).

**13.** L'appareil (100) selon l'une quelconque des Revendications 9 à 12 comprenant en outre un moyen de mesure de la masse d'un échantillon de roche sur la monture (118).

**14.** L'appareil (100) selon l'une quelconque des Revendications 9 à 13 comprenant en outre un moyen d'imagerie destiné à l'observation et de préférence la mesure de la déformation d'un échantillon de roche monté dans l'appareil (100) au cours d'au moins un impact.

**Fig. 1**

**Fig. 2**

Fig. 3

**REFERENCES CITED IN THE DESCRIPTION**

**Non-patent literature cited in the description**

- **L.M. TAVARES ; R.M. CARVALHO.** Impact work index prediction from continuum damage model of particle fracture. *Minerals Engineering,* 2007, vol. 20, 1368-1375